# EUROPEAN PATENT APPLICATION

(11) **EP 1 160 690 A1**
(43) Date of publication of application: **05.12.2001**
(21) Application number: 01302946.7
(22) Date of filing: 29.03.2001
(51) Int. Cl.: G06F 17/30

(54) **Method of indexing and similarity search in a feature vector space**

(30) Priority: 31.05.2000 US 208086 P; 21.08.2000 KR 2000048323
(71) Applicant: SAMSUNG ELECTRONICS CO. LTD., Suwon-city, Kyungki-do (KR); THE REGENTS OF THE UNIVERSITY OF CALIFORNIA, Oakland, California 94607-5200 (US)
(72) Inventor: Shin, Hyun-doo, 510-1302Mugigae Maeul Cheongku Apt, Seongnam-city, Kyungki-do (KR); Choi, Yang-lim, 102-1112 Wooman Sunkyung Apt., Suwon-city, Kyungki-do (KR); Wu, Peng, Dpt.of Electr. and Computer Engineering, Santa Barbara, CA 93106-9560 (US); Manjunath, Bangalore S., Dpt. of Electrical and, Santa Barbara, CA 93106-9560 (US)
(74) Representative: Geary, Stuart Lloyd

(57) **Abstract**

In the field of indexing multidimensional data, there has not been a satisfactory data structure to support the nearest neighbor (NN)-search efficiently when the feature vectors are not uniformly distributed.
A method of indexing data elements in a feature vector space comprises assigning data elements to first level index terms with a first course granularity and identifying first level index terms for which there are concentrations of elements and extending these first level index terms to provide a finer grained index term for the elements making up the concentrations of elements.
Additionally a method of searching for similarity in a feature vector data space is provided.

## Description

The present invention relates to a method of indexing multimedia data.

Fast and efficient access to a database is always of concern when dealing with large quantities of multimedia data. Nowadays, with the rapidly growing ability to produce multimedia data, managing such databases and providing methods to access the multimedia content has become an important issue. For example, a typical image collection may range from a few hundred thousand to a few million or more items. For each object (or record) in the database, its degree (the dimensionality of the attributes) is much higher than that of a conventional database.

To access a database with such properties, an efficient indexing method has to be carefully designed. The efficiency of an indexing method can be evaluated fairly by fixing the focus on the indexing method. For example, some indexing methods aim at minimizing storage overhead, while others may focus on efficiently supporting the range of queries.

Indexing of multidimensional data has been a research issue for years. But for multimedia databases, due to their domain specific needs, there has not been a satisfactory data structure to support the nearest neighbor (NN)-search efficiently.

To solve this problem, a conventional indexing method uses a vector approximation (VA)-file. However, such a conventional indexing method may be affected by the distribution of feature vectors. According to this conventional indexing method, it is reasonable to expect a great reduction of complexity when the feature vectors are uniformly distributed. However, efficient indexing may not be accomplished when the feature vectors are not uniformly distributed.

A method of indexing data elements in a feature vector space according to the present invention comprises:
assigning data elements to first level index terms with a first course granularity; and
identifying a first level index term for which there is a concentration of elements and extending the first level index term to provide a finer grained index term for the elements making up said concentration of elements.

Conveniently, the index terms comprise vector approximations.

Preferably, a method according to the present invention includes inputting a plurality of signals representing said data elements, storing said data elements in a database and storing said index terms in a database.

According to the present invention, there is also provided a signal representing program codes for configuring a computer to perform a method according to the present invention.

According to the present invention, there is further provided a data carrier having program codes, for configuring a computer to perform a method according to the present invention, recorded therein or thereon.

An embodiment of the present invention will now be described, by way of example, with reference to the accompanying drawings, in which:
Figure 1 is a flowchart illustrating an indexing method for a feature vector data space according to the present invention;
Figure 2 is a diagram illustrating an example of a feature vector data space over which a vector approximation (VA)-file is constructed; and
Figures 3A and 3B are diagrams illustrating examples in which a cell defined as an attractor is partitioned into a plurality of sub-cells.

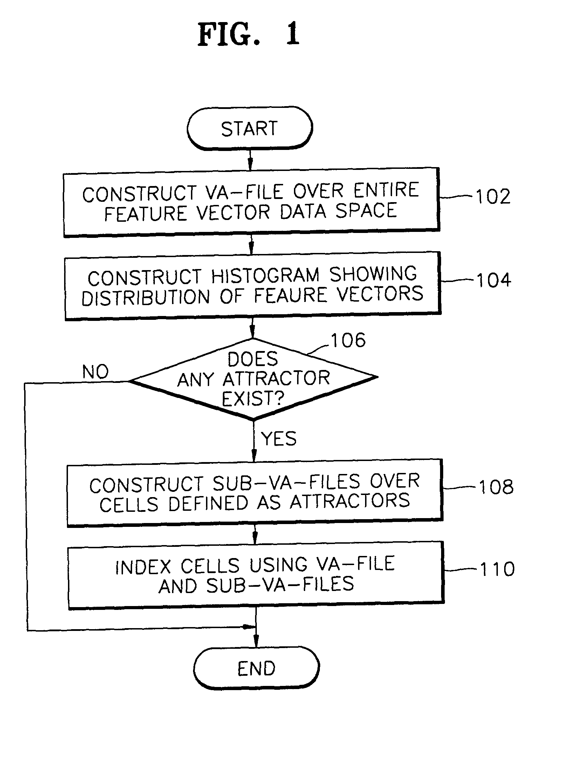

Referring to Figure 1, in an indexing method according to the present invention, a vector approximation (VA)-file is constructed over an entire feature vector data space in step 102. To construct the VA-file, the feature vector data space is partitioned into a plurality of cells having a uniform size. In this specification, to explain a situation where the present invention works effectively, it is assumed that feature vectors are concentrated on some arbitrary cells among the plurality of partitioned cells.

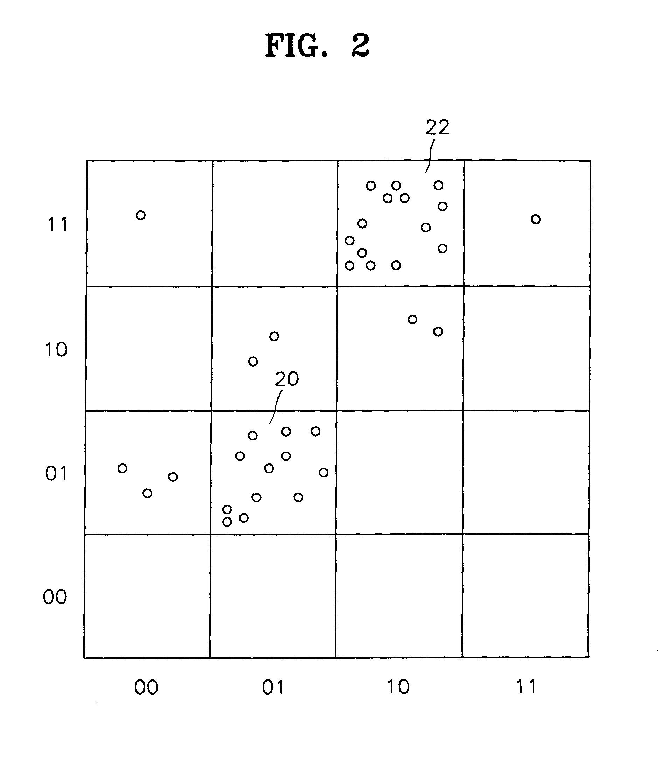

Referring to Figure 2, feature vectors are concentrated on a cell 20 in which feature vectors approximate to 01 01 and on a cell 22 in which feature vectors approximate to 10 11. Hereinafter, a cell on which feature vectors are concentrated is referred to as an attractor.

Next, in step 104, a histogram illustrating the distribution of feature vectors throughout the entire feature vector data space is obtained. In step 106, it is determined based on the histogram whether any attractors exist. For example, from the histogram, it is possible to define a cell having at least a predetermined number of feature vectors as an attractor. In this embodiment, a cell having 10 or more feature vectors is defined as an attractor. For example, it appears that the cells 20 and 22 in Figure 2 have more than 10 feature vectors, so the cells 20 and 22 are defined as attractors.

In step 108, a sub-VA-file is constructed over a cell defined as an attractor when the existence of an attractor is confirmed. The cell defined as an attractor is partitioned into a plurality of sub-cells. The sub-VA-file is constructed based on the locations of feature vectors in the sub-cell.

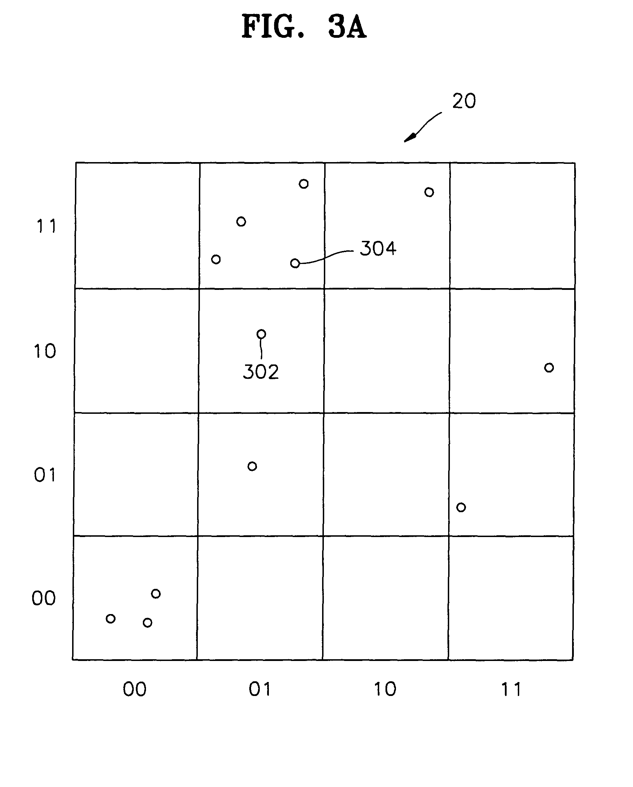

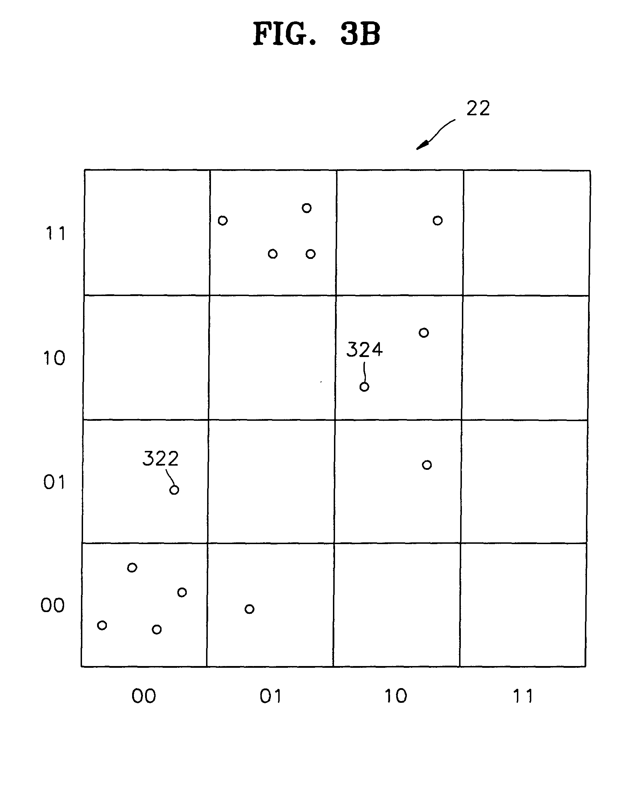

Figures 3A and 3B are diagrams illustrating examples in which a cell defined as an attractor is partitioned into a plurality of sub-cells. In Figure 3A, the cell 20 of 01 01 in Figure 2 is partitioned into a plurality of sub-cells. In Figure 3B, the cell 22 of 10 11 in Figure 2 is partitioned into a plurality of sub-cells. A sub-VA-file is constructed based on the locations of feature vectors in a sub-cell.

On the other hand, if no attractors exist, which means the uniformity of the vector space can be at least approximately maintained, a typical VA-file will be used. In other words, a VA-file is constructed by approximating the feature vectors in the feature vector data space in partitioned cell units.

In step 110, feature vectors in the cell defined as an attractor are approximated using the VA-file and the sub-VA-file. For example, feature vector data 302 and feature vector data 304 in the cell 20 of 01 01 are approximated as 01 01 01 10 and 01 01 01 11, respectively. Feature vector data 322 and feature vector data 324 in the cell 22 of 10 11 are approximated as 10 11 00 01 and 10 11 10 10, respectively. Therefore, the cell is indexed based on a file in which the VA-file and the sub-VA-file are united. The file in which the VA-file and the sub-VA-file are united may be referred to as a hierarchical vector approximation (HVA)-file.

According to an indexing method of the present invention, a feature vector data space is hierarchically approximated based on the distribution of feature vectors to index cells. Hierarchical indexing allows cells having a high concentration of feature vectors to be finely indexed. In particular, according to the present invention, more efficient indexing of feature vectors can be achieved when the feature vectors are not uniformly distributed in a high-dimensional vector space. In other words, an approximation structure is adjusted depending on the distribution of feature vector data in a feature vector data space to cope with the concentration of feature vector data.

A method of performing a similarity search on a feature vector data space which has been hierarchically indexed according to the indexing method of a feature vector space described with reference to Figure 1, will now be described.

Feature vectors in each cell on which feature vectors are concentrated in the feature vector data space have been approximated using a sub-VA-file. For example, when a similarity search is performed on a query point approximated as 01, 01, 01, 10, a cell with coordinates 01, 01 in the feature vector data space is selected as a searched cell, and it is determined whether a cell approximated as 10, 10 exists in the selected cell. When it is determined that the cell approximated as 10, 10 exists in the selected cell, the selected cell is determined as a searched cell.

Such a similarity searching method allows a feature point having a similar feature to a query point to be finely and accurately searched in a feature vector data space even if feature vectors are not uniformly distributed in the high-dimensional vector space. For a searching method, a variety of searching methods including nearest neighbour (NN) searching may be used.

In the embodiment described with reference to Figure 1, 2-step hierarchical indexing is performed, but hierarchical indexing with more steps may be performed. In the embodiment described with reference to Figure 1, a histogram is used to determine whether an attractor exists, but modifications or changes to the analyzing method can be made by those skilled in the art. In other words, the scope of the present invention defined by the attached claims is not restricted to the above embodiment.

An indexing method according to the present invention can be made into programs which can be executed on a personal computer or a server computer. Program codes and code segments constructing the programs can be easily inferred by computer programmers skilled in the art. The programs can be stored in a computer-readable recording medium. The computer-readable medium could be a magnetic recording medium or an optical recording medium. The program codes may also be transmitted using electric and electromagnetic signals.

A database system according to the present invention comprises a data store, an input means, a processing and an output means. The processing means is programmed to index a plurality of multimedia data items, received by the input means, by the method illustrated in Figure 2 and store the items and the index in the data store. The processing means is also programmed to search the data store on the basis of an input multimedia data item using the above described search method and output the result of the search through the output means.

As described above, in an indexing method of a feature vector data space according to the present invention, the feature vector data space can be finely indexed when feature vectors are not uniformly distributed in a high-dimensional vector space.

In addition, a similarity searching method according to the present invention allows a feature point having a similar feature to a query point to be finely and accurately searched for in a feature vector data space even if feature vectors are not uniformly distributed in the high-dimensional vector space.

## Claims

1. A method of indexing data elements in a feature vector space, the method comprising:
assigning data elements to first level index terms with a first course granularity; and
identifying a first level index term for which there is a concentration of elements and extending the first level index term to provide a finer grained index term for the elements making up said concentration of elements.

2. A method according to claim 1, wherein the index terms comprise vector approximations.

3. A method according to claim 1 or 2, including inputting a plurality of signals representing said data elements, storing said data elements in a database and storing said index terms in a database.

4. A signal representing program codes for configuring a computer to perform a method according to any preceding claim.

5. A data carrier having program codes, for configuring a computer to perform a method according to any one of claims 1 to 3, recorded therein or thereon.

6. An indexing method of a feature vector data space in which feature vectors are indexed, the indexing method comprising the steps of:
(a) determining whether at least one cell on which feature vectors are concentrated exists; and
(b) hierarchically indexing the feature vector data space when it is determined that at least one cell on which feature vectors are concentrated exists in the step (a).

7. The indexing method of claim 6, further comprising the step of (pa-1) partitioning the feature vector data space into a plurality of cells having a uniform size, before the step (a).

8. The indexing method of claim 7, wherein the step (a) comprises the steps of:
(a-1) constructing a histogram illustrating the number of feature vectors in each cell; and
(a-2) analyzing the distribution of the feature vectors using the histogram and determining whether at least one cell on which feature vectors are concentrated exists.

9. The indexing method of claim 6, wherein the step (b) comprises the step of indexing the feature vector data space using a vector approximation file.

10. The indexing method of claim 9, wherein the step (b) comprises the steps of:
(b-1) constructing a sub-vector approximation file over each cell on which feature vectors are concentrated; and
(b-2) approximating feature vectors in each cell, on which feature vectors are concentrated, using the vector approximation file and a corresponding sub-vector approximation file.

11. The indexing method of claim 6, wherein the step (b) comprises the steps of:
(b-1) partitioning corresponding cells into sub-cells when it is determined that at least one cell on which feature vectors are concentrated exists in the step (a); and
(b-2) approximating the feature vectors in each of the corresponding cells using the sub-cells, thereby hierarchically indexing the feature vector data space.

12. A computer-readable recording medium for storing program codes used for performed an indexing method of a feature vector data space, the indexing method comprising the steps of:
(a) determining whether at least one cell on which feature vectors are concentrated exists; and
(b) hierarchically indexing the feature vector data space when it is determined that at least one cell on which feature vectors are concentrated exists in the step (a).

13. The computer-readable recording medium of claim 12, wherein the step (b) comprises the step of indexing the feature vector data space using a vector approximation file.

14. The computer-readable recording medium of claim 13, wherein the step (a) comprises the steps of:
(a-1) constructing a histogram illustrating the number of feature vectors in each cell; and
(a-2) analyzing the distribution of the feature vectors using the histogram and determining whether at least one cell on which feature vectors are concentrated exists, and
the step (b) comprises the steps of:
(b-1) constructing a sub-vector approximation file over each cell on which feature vectors are concentrated; and
(b-2) approximating feature vectors in each cell, on which feature vectors are concentrated, using the vector approximation file and a corresponding sub-vector approximation file.

15. A method of searching for similarity in a feature vector data space in which feature vectors are indexed, the method comprising the step of (a) performing a similarity search in the feature vector data space which has been indexed by determining whether cells on which feature vectors are concentrated exist and hierarchically indexing feature vectors in the cells on which it is determined that feature vectors are concentrated according to a predetermined indexing method.

16. The method of claim 15, wherein the step (a) is performed based on a nearest neighbor search.
